# EUROPEAN PATENT APPLICATION

(11) **EP 2 597 862 A2**
(43) Date of publication of application: **29.05.2013**
(21) Application number: 13153479.4
(22) Date of filing: 09.02.2009
(51) Int. Cl.: H04N 5/225, G02B 5/26, G02B 5/28, G02B 5/20, G02B 27/00

(54) **Dichroic cut filter for imaging**

(30) Priority: 08.02.2008 US 27334 P; 08.02.2008 US 27338 P
(62) Divisional of application: 09708189.7
(71) Applicant: Google Inc., Mountain View, CA 94043 (US)
(72) Inventor: McClatchie, Iain, Los Altos, CA 94024 (US)
(74) Representative: Round, Edward Mark

(57) **Abstract**

An image device for wide-angle imaging may include an integrated optical system with a wide-angle dichroic cut filter. The dichroic cut filter may be an ultra-violet/infrared (UV/IR) cut filter to block UV and IR wavelengths of light and to transmit visible light. The dichroic cut filter is positioned adjacent to a surface of a lens in the optical system that receives rays of light at a substantially uniform angle of incidence along its surface. For example, the lens having the dichroic cut filter may receive all rays of light at an angle of incidence normal to the lens surface. The passband characteristics of the dichroic cut filter thus remain consistent for all rays of light. The dichroic cut filter may also be positioned near an aperture of the image device so as to direct retroreflected light away from the image sensor.

## Description

### CROSS REFERENCE TO RELATED APPLICATIONS

This application claims the benefit of U.S. Provisional Application No. 61/027,338 (SKGF Ref. No. 2525.0820000), filed February 8, 2008, titled "Dichroic Cut Filter for Wide-Angle Imaging," which is incorporated herein by reference in its entirety. This application also claims the benefit of U.S. Provisional Application No. 61/027,334 (SKGF Ref. No. 2525.1230000), filed February 8, 2008, titled "Reducing Flare in a Lens Having a Dichroic Filter," which is incorporated herein by reference in its entirety.

### BACKGROUND

### Field

Embodiments of the present invention generally relate to the field of imagery. More specifically, embodiments of the present invention refer to blocking undesirable wavelengths of light from reaching an image sensor and minimizing retroreflection in an image device. Embodiments of the present invention also refer to reducing flare in an optical system containing a dichroic cut filter.

### Background

Dichroic cut filters are used in optical systems of image devices to selectively pass light of a specified range of wavelengths while reflecting other wavelengths. In image applications, a commonly-used dichroic cut filter is an ultraviolet/infrared (UV/IR) cut filter. UV/IR cut filters are used to block UV and IR wavelengths of light and to transmit visible light. Conventional UV/IR cut filters are thin films with varying refractive indices stacked on a transparent surface to achieve a particular wavelength frequency response.

The passband of a UV/IR cut filter may change depending on the angle of incidence of light impinging thereon. As the passband characteristics of the filter's transmission curve change with varying angles of incidence, the UV/IR cut filter may leak and transmit unwanted light to a detector when light is received outside of the optimal range of angles. The color fidelity of an image then becomes a greater issue.

Digital camera sensors, such as CMOS and CCD sensors, are sensitive to wavelengths from approximately 380nm to at least 1000nm. The human eye, on the other hand, may only process colors residing in about the 400-700nm range. As such, to process images only with colors visible to the human eye, short (e.g., < 380nm) and long (e.g., > 700nm) wavelengths of light must be filtered from the image. One technique to filter these undesirable wavelengths of light is to employ a UV cut filter to filter the shorter wavelengths of light and an IR cut filter to filter the longer wavelengths of light. These cut filters attenuate the shorter and longer wavelengths of light, while transmitting wavelengths of light visible to the human eye.

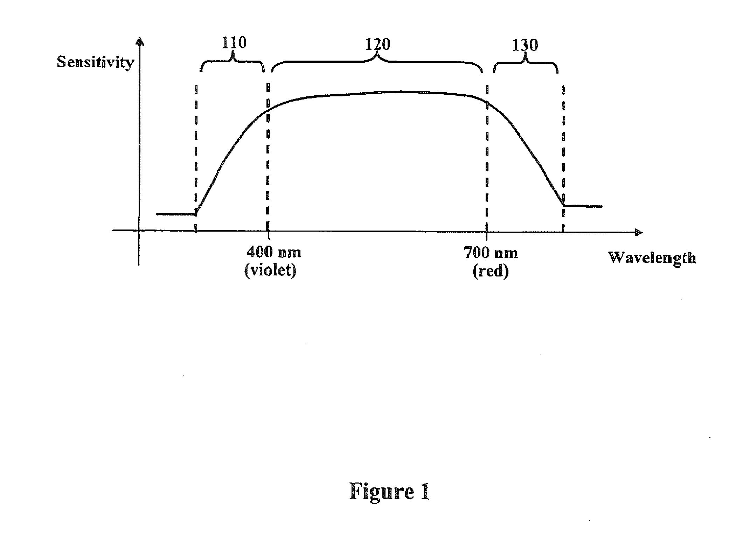

There are two kinds of cut filters: absorptive cut filters and reflective cut filters. Absorptive cut filters are made with special dyes disposed on optical glass, whereas reflective cut filters are composed of several layers of sub-wavelength material disposed on an optical surface. A reflective cut filter may also be referred to as a dichroic cut filter. Figure 1 illustrates a transmission curve for a UV/IR cut filter, where the filter transmits light within a passband 120 and attenuates light outside of cut bands 110 and 130. Absorptive and reflective cut filters transmit most light (e.g., > 90% transmission of light) within passband 120 and block most wavelengths of light (e.g., < 10% transmission of light) within cut bands 110 and 130, where cut bands 110 and 130 may span from, for example, 20-50nm.

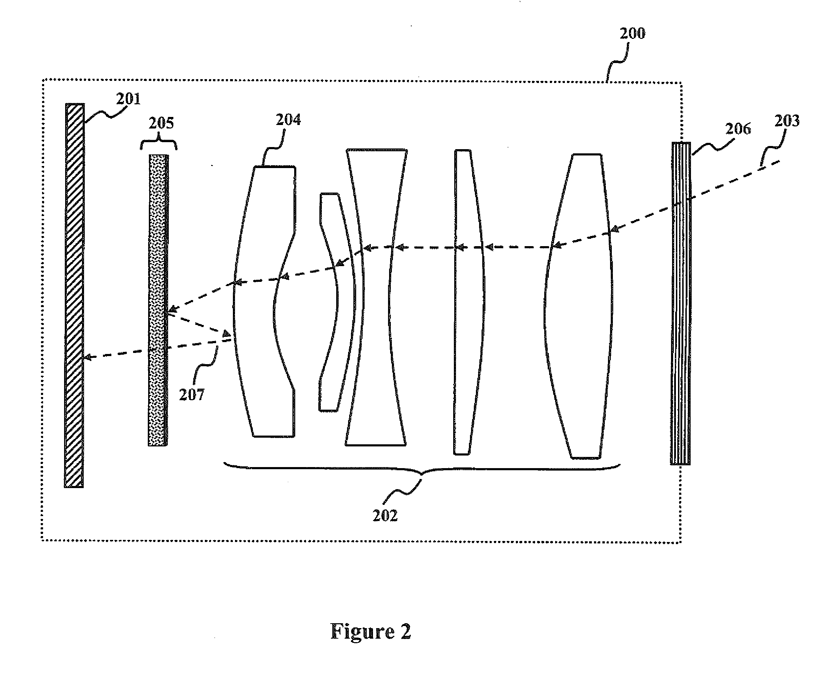

It is desirable to design the UV/IR cut filter with sharp cut bands such that the filter not only transmits wavelengths of light within passband 120 but also reduces the effect of "flare" on an image sensor. Flare will be discussed with respect to an image device 200 illustrated in Figure 2. Figure 2 illustrates an image device 200 with an optical system 202 incorporating a UV/IR cut filter 205. A digital single-lens reflex camera is an example of an image device with UV/IR cut filter 205 positioned between an image sensor 201 and optical system 202. Flare refers to light 207 that reaches image sensor 201 after reflecting off two or more surfaces in optical system 202. For example, as illustrated in Figure 2, image light 203 may enter optical system 202 through aperture 206, pass through optical system 202, and reflect off a surface of UV/IR cut filter 205 as reflected light 207. Reflected light 207 is reflected back through UV/IR cut filter 205 by lens surface 204 prior to reaching image sensor 201. Reflected light 207 then causes a ghost image to appear on image sensor 201. Reflected light 207 may reflect off multiple surfaces in optical system 202. For example, reflected light 207 may reflect off walls in an assembly of optical system 202, dust particles in optical system 202, imperfections on optical surfaces in optical system 202, or an air/glass interface in optical system 202. Each ghost image caused by reflected light 207 may have a brightness orders of magnitude less than light from a primary image (e.g., a chief ray of light). However, in image applications with a bright source in a field of view (e.g., the sun in the background), the order of magnitude of brightness due to flare is much greater.

The effect of flare in image device 200 may be heightened by light outside of the UV/IR cut filter's passband entering optical system 202 and reaching image sensor 201. For instance, within cut bands 110 and 130, UV/IR cut filter 205 reflects approximately 50% of light and transmits 50% of light at the middle of cut bands 110 and 130. As such, a flare off UV/IR. cut filter 205 may comprise one 0.5% reflection of light and one 50% reflection of light, along with a 50% transmission of light (note: most flares comprise two 0.5% reflections of light). UV/IR cut filter 205, as a result, passes more energy from flare in cut bands 110 and 130 as compared to energy from flare in passband 120. The energy from flare increases as cut bands 110 and 130 increase in width. For example, for a given passband, the energy from flare may increase approximately 50% as cut bands 110 and 130 increase from, for example, 20 to 40nm. The additional light received by image sensor 201 consequently reduces a signal/noise ratio of a processed image by image device 200 and also adds distracting artifacts to the resulting image.

In view of the above, what is needed is a UV/IR cut filter that reduces transmission of unwanted wavelengths of light and/or flare within an image device.

### SUMMARY

In order to obtain an image with high color fidelity, attenuation of wavelengths of light outside of a UV/IR cut filter's passband must be increased. In an embodiment of the present invention, an apparatus for wide-angle imaging in an image device may include an integrated optical system with a wide-angle dichroic cut filter. Within the optical system, the dichroic cut filter may be positioned adjacent to a surface of a lens in the optical system and have a curvature such that the filter's surface is approximately normal to all chief rays of light. For example, the dichroic cut filter may be located on the surface of a lens that is near an aperture of the image device, wherein the lens receives GP-1431-00-PC (SKGF Ref.: 2525.082PC01) Google Confidential chief rays of light at a normal angle of incidence along its surface. At this location, the dichroic cut filter may also minimize a retroreflection of light on an image sensor and direct the retroreflection of light away from the image sensor.

In another embodiment, a method for wide-angle imaging in an image device may include the following steps: receiving chief rays of light from an imaged object; and, directing the chief rays of light to an image sensor through an integrated optical system with a wide-angle dichroic cut filter. Further, the method for generating a wide-angle image with minimal retroreflection may also include directing retroreflected light away from the image sensor. In directing the light to the image sensor, a UV/IR cut filter may be positioned adjacent to a surface of a lens in the optical system to maintain a substantially consistent transmission curve for all chief rays of light received by the image device. This lens may receive chief rays of light at a substantially uniform angle of incidence along its surface.

In order to obtain an image with high color fidelity, in an environment with a bright source in a field of view, flare must be minimized. In an embodiment of the present invention, an apparatus for reducing flare in an image device may include an absorptive UV cut filter positioned in an integrated optical system and a dichroic IR cut filter disposed on a lens in the optical system. The dichroic IR cut filter receives light reflected from one or more surfaces in the optical system at an angle of incidence larger than an angle of incidence of image light (e.g., a chief ray) entering the dichroic IR cut filter. The absorptive UV cut filter may be used to reduce a reflection of UV-wavelength light from reaching an image sensor of the image device. Further, the dichroic IR cut filter may be used to reduce a reflection of IR-wavelength light as an angle of incidence of the reflection of the IR-wavelength light striking the dichroic IR cut filter increases with respect to the angle of incidence of image light striking the dichroic cut filter.

In another embodiment, the image device may include a dichroic UV cut filter and an absorptive IR cut filter, such that the dichroic UV cut filter receives light reflected from one or more surfaces in the optical system at an angle of incidence smaller than an angle of incidence of image light entering the dichroic UV cut filter.

In another embodiment, a method for reducing flare in an image device may include the following steps: receiving reflected light and directing the reflected light away from an image sensor through an integrated optical system with an absorptive UV cut filter and a dichroic IR cut filter. The dichroic IR cut filter may be disposed on a lens in the optical system, where the dichroic IR cut filter may receive the reflected light at an angle of incidence larger than an angle of incidence of the image light entering the dichroic IR cut filter.

In another embodiment, a method for reducing flare in an image device may include the following steps: receiving reflected light and directing the reflected light away from an image sensor through an integrated optical system with an absorptive IR cut filter and a dichroic UV cut filter. The dichroic UV cut filter may be disposed on a lens in the optical system, where the dichroic UV cut filter may receive the reflected light at an angle of incidence smaller than an angle of incidence of the image light entering the dichroic IR cut filter.

Further embodiments, features, and advantages of the present invention, as well as the structure and operation of the various embodiments are described in detail below with reference to accompanying drawings.

### BRIEF DESCRIPTION OF THE DRAWINGS

The present invention is illustrated by way of example, and not by way of limitation, in the figures of the accompanying drawings in which:

Figure 1 illustrates passband and cut band regions of a transmission curve for a UV/IR cut filter.

Figure 2 illustrates flare from reflected light in an optical system of an image device.

Figure 3 illustrates a conventional image device with an optical system.

Figure 4 illustrates an example of a transmission curve for an ultra-violet/infrared cut filter.

Figure 5 illustrates an example of an expansion of a transmission curve for an ultra-violet/infrared cut filter due to a retroreflection of light onto a detector plane of an image sensor.

Figure 6 illustrates a retroreflection of light from an imaged object traveling towards an aperture of a conventional image device.

Figure 7 illustrates a retroreflection of light from an imaged object traveling towards a detector plane of an image sensor in a conventional image device.

Figure 8 illustrates a conventional image device with an external dichroic cut filter,

Figure 9 illustrates one embodiment of an integrated optical system for wide-angle imaging in an image device.

Figure 10 illustrates an example of a signal characteristic of a broadband anti-reflective coating superimposed on a transmission curve of a dichroic cut filter.

Figure 11 illustrates a retroreflection of light from an imaged object in one embodiment of an integrated optical system for wide-angle imaging in an image device.

Figure 12 illustrates one embodiment of a method for wide-angle imaging in an image device.

Figure 13 illustrates one embodiment of an integrated optical system, with an absorptive UV cut filter and a dichroic IR cut filter, for reducing flare in an image device.

Figure 14 illustrates a reduction of flare in one embodiment of an integrated optical system, with an absorptive UV cut filter and a dichroic IR cut filter, for reducing flare in an image device.

Figure 15 illustrates a transmission curve of a dichroic UV/IR cut filter.

Figure 16 illustrates a widening of an IR cut band in a transmission curve of a dichroic UV/IR cut filter.

Figure 17 illustrates a reduction of flare in another embodiment of an integrated optical system, with an absorptive UV cut filter and a dichroic IR cut filter, for reducing flare in an image device.

Figure 18 illustrates one embodiment of an integrated optical system, with an absorptive IR cut filter and a dichroic UV cut filter, for reducing flare in an image device.

Figure 19 illustrates a widening of a UV cut band in a transmission curve of a dichroic UV/IR cut filter.

Figure 20 illustrates one embodiment of a method for reducing flare in an image device.

### DETAILED DESCRIPTION

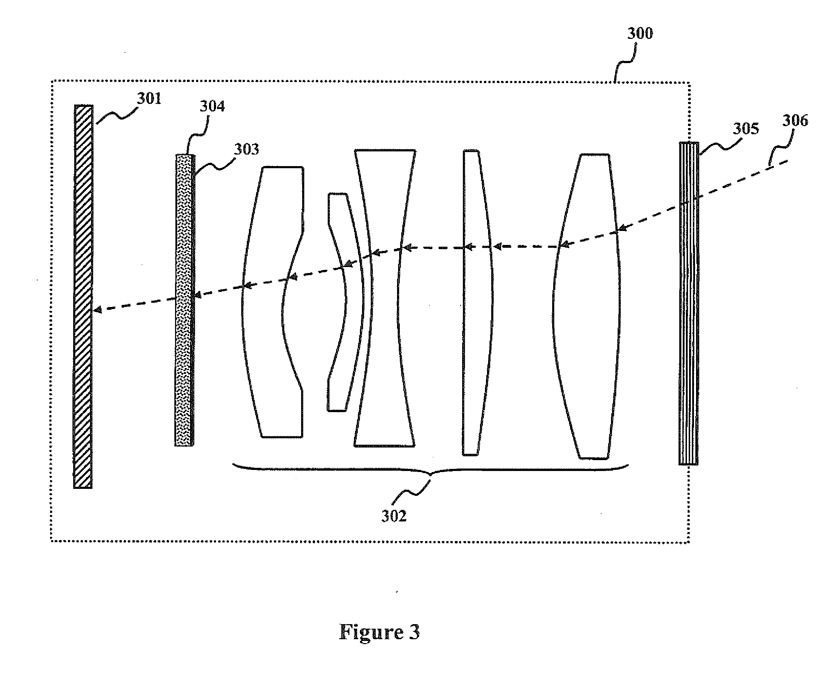

Dichroic cut filters are used in optical systems of image devices to selectively pass light of a specified range of colors while reflecting other colors. In image applications (e.g., high-resolution image applications), a commonly used dichroic cut filter is an ultra-violet/infrared (UV/IR) cut filter. An example dichroic UV/IR cut filter is a B+W 486 interference filter, which may be used for blocking ultra-violet (UV) and infrared (IR) wavelengths of light. UV/IR cut filters are used to block UV and IR wavelengths of light and to transmit visible light. Conventional UV/IR cut filters are thin films with varying refractive indexes stacked on a transparent surface to achieve a particular wavelength frequency response. Figure 3 illustrates a conventional image device 300, where a UV/IR cut filter 303 is positioned along a surface of a transparent plate 304. In this lens configuration of Figure 3, a chief ray of light 306 from an imaged object enters an aperture 305 of image device 300. Light 306 is directed towards image sensor 301 by an optical system 302, and then filtered by UV/IR cut filter 303 prior to receipt by image sensor 301 for further processing by image device 300.

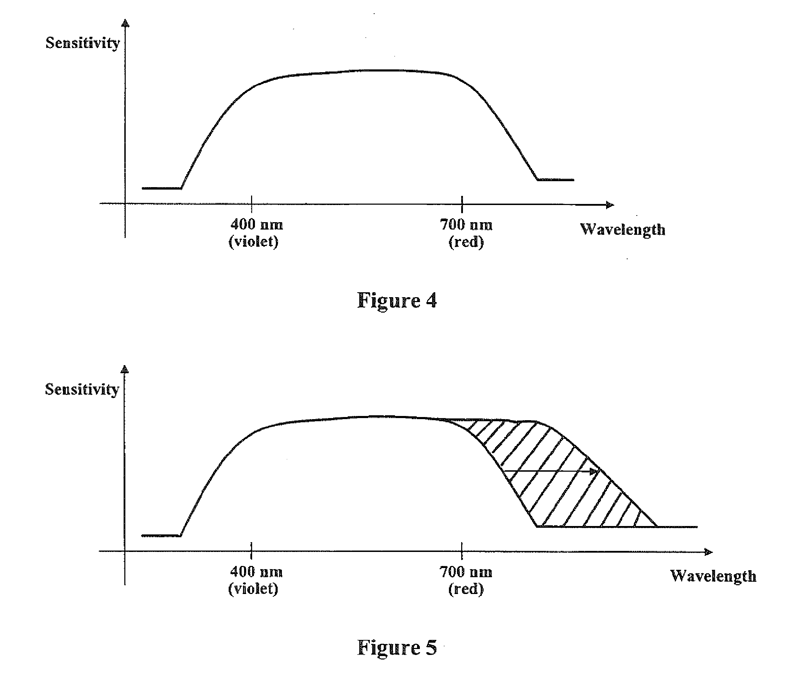

Figure 4 illustrates an example transmission curve for UV/IR cut filter 303. The transmission curve in Figure 3 passes colors of the visible light spectrum (e.g., 400 nm correlates to violet and 700 nm correlates to red) and attenuates wavelengths of light falling outside of the cut filter's passband. Although the attenuated wavelengths are not visible by the human eye, it is desirable to block these wavelengths because image device 300 is sensitive to these wavelengths and may still process the signal information.

The transmission curve of UV/IR cut filter 303 varies with the angle of incidence at which a ray of light strikes the filter. For instance, if image device 300 is used to capture a wide-angle image, some rays of light from the image may enter cut filter 303 at an angle greater than an optimal angle. For these wide-angle images, the passband characteristics of the cut filter's transmission curve may expand and pass undesirable wavelengths of light onto image sensor 301. An example resulting transmission curve is illustrated in Figure 5, where the wide-angle rays cause the filter to allow wavelengths of light greater than 700 nm to pass through and be processed by image sensor 301. In the example of Figure 5, the light from UV/IR cut filter 303 may appear as a reddish color in the processed image generated by image device 300 due to the processing of wavelengths outside the visible spectrum.

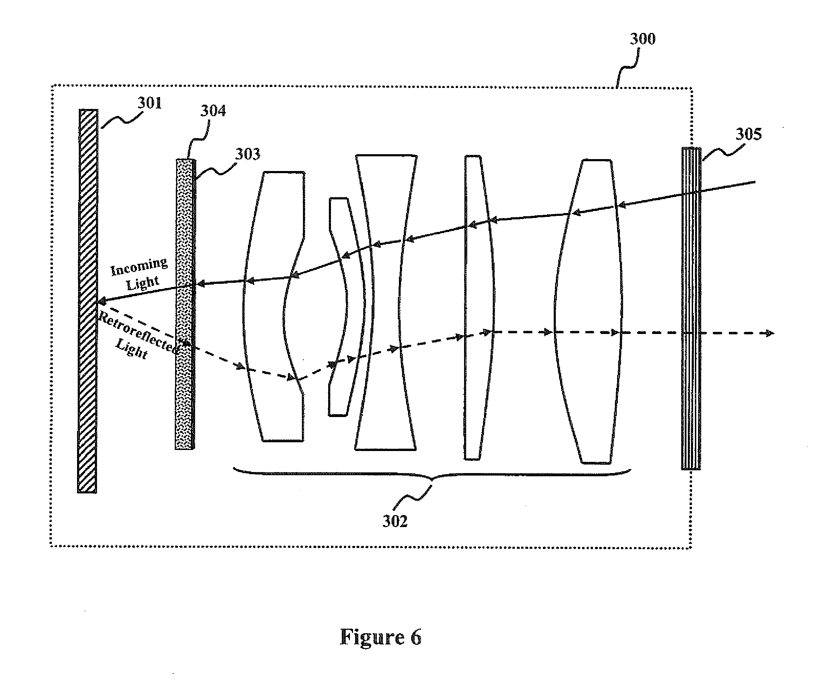

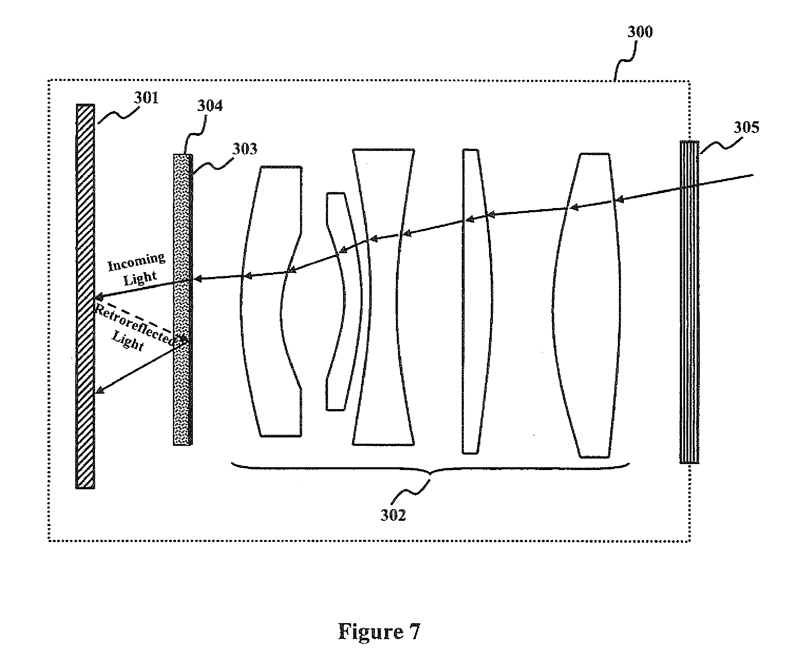

Additionally, a portion of the incoming light may reflect off a detector plane of image sensor 301. This effect is known as retroreflection, which refers to the reflection of light back to its source, independent of its angle of incidence. In image device 300, a retroreflection of light may travel along one of two paths. First, as illustrated in Figure 6, incoming light may enter aperture 305, travel through optical system 302 and UV/IR cut filter 303, and strike the detector plane of image sensor 301. The incoming light may reflect off a detector plane of image sensor 301, pass back through optical system 302, and exit image device 300 through, for example, aperture 305. The reflection of light off image sensor 301 may be referred to as retroreflection. Second, as illustrated in Figure 7, retroreflection may cause the light to be reflected back to UV/IR cut filter 303 at an angle of incidence different than the initial angle of incidence of the incoming light striking UV/IR cut filter 303. If the angle of incidence changes substantially, UV/IR cut filter 303 may not pass the retroreflected light back through optical system 302, but may instead reflect the retroreflected light back onto the detector. This may result in an undesirable image of the object.

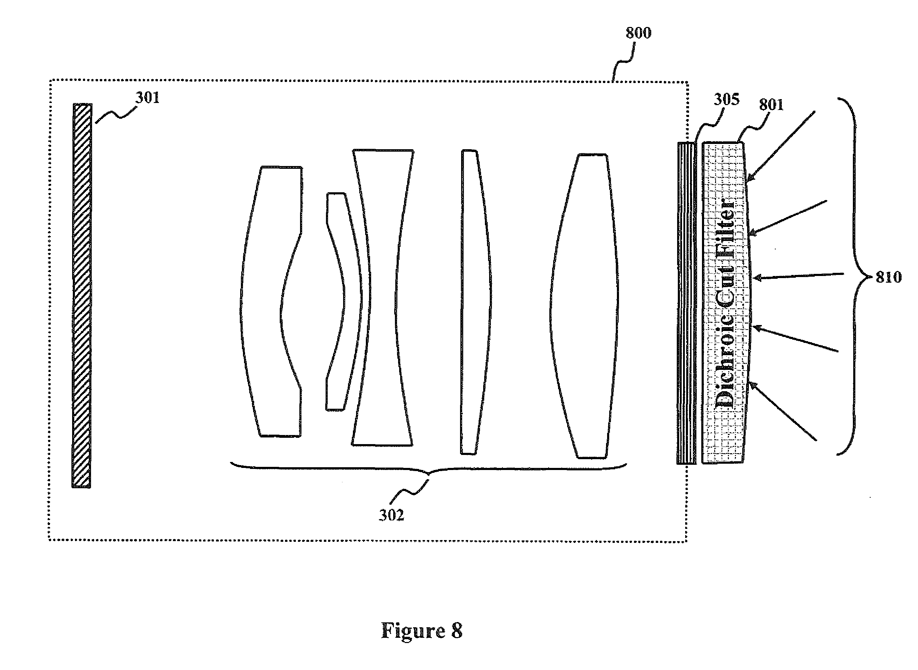

Figure 8 illustrates another conventional image device 800 with an external dichroic UV/IR cut filter 801 coupled to its aperture 305. An example of external dichroic cut filter 801 is a B+W 486 interference filter, which may be used for blocking ultra-violet (UV) and infrared (IR) wavelengths of light. The B+W 486 interference filter may be mounted to aperture 305 of image device 800. Other external dichroic cut filters known to those skilled in the art may also be used.

A drawback of image device 800 is that light received by external dichroic cut filter 801 has a wide range of angles of incidence due to the filter's surface. Figure 8 illustrates incoming rays of light 810 received by external dichroic filter 801 at varying angles of incidence. As a result of the wide range of angles of incidence of light 810, the transmission curve of external dichroic cut filter 801 shifts for each angle of incidence of each ray of light. As described with respect to Figure 5, a shift in the transmission curve may pass undesired wavelengths of light onto image sensor 301 and, consequently, an image with inaccurate color may be generated by image device 800.

External dichroic filter 801 may be adequate for some imaging applications, but it would not be appropriate for applications involving wide-angle images. In using a lens in an image device's optical system, a wide-angle dichroic cut filter may be implemented while blocking undesired wavelengths of light from reaching an image sensor, minimizing retroreflection, and maintaining high color fidelity in the image.

In the following description, for purposes of explanation, numerous specific details are set forth in order to provide a thorough understanding of the present invention. It will be evident, however, to one skilled in the art that the present invention may be practiced without these specific details. In other instances, well-known circuits, structures, and techniques are not shown in detail, but rather in a block diagram in order to avoid unnecessarily obscuring an understanding of this description.

Reference in the description to "one embodiment" or "an embodiment" means that a particular feature, structure, or characteristic described in connection with the embodiment is included in at least one embodiment of the invention. The phrase "in one embodiment" located in various places in this description does not necessarily refer to the same embodiment.

In one embodiment, the apparatus and methods described herein may be used with various image devices such as digital single-lens reflex cameras and digital scanners. Alternatively, the apparatus and methods herein may be used with other types of image devices.

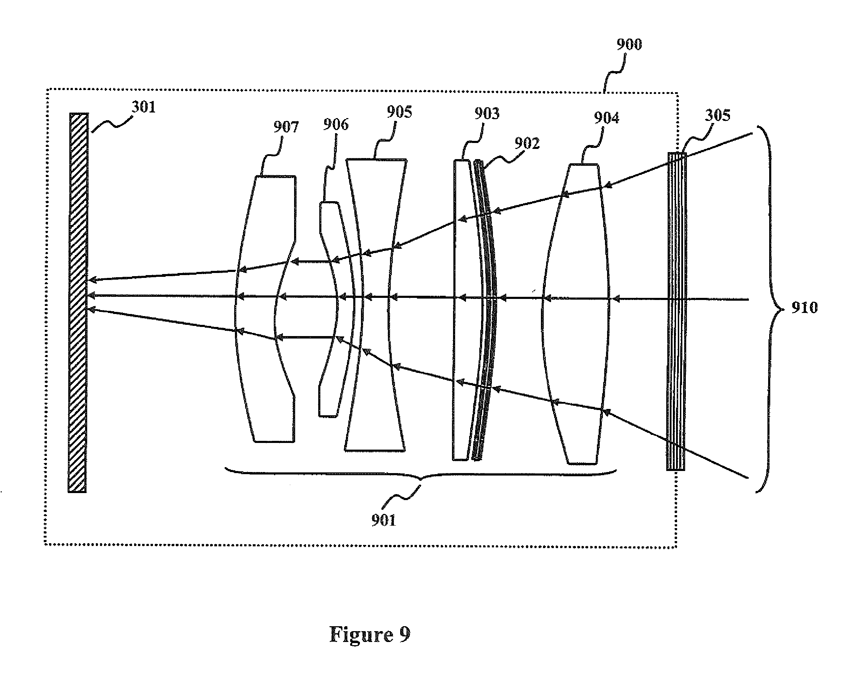

Figure 9 illustrates one embodiment of an image device 900 with an optical system 901 and a wide-angle dichroic cut filter 902. Optical system 901 is integrated in image device 900, where optical system 901 passes chief rays of light received from aperture 305 to image sensor 301. Optical system 901 may include one or more lenses 903-907 to receive chief rays of light from an imaged object and to project the chief rays of light onto a detector plane of image sensor 301. Optical systems are known to those skilled in the art.

Dichroic cut filter 902 may be used to selectively pass a specified range of wavelengths while reflecting other wavelengths. An example of dichroic cut filter 902 is a UV/IR cut filter, which is used to block UV and IR wavelengths of light and to transmit visible light. Alternatively, other dichroic cut filters may be used. The specific wavelengths of light mentioned in the description of image device 900 and optical system 901, and throughout this application, are given for example purposes only and are not meant to be limiting. Those skilled in the art will recognize other wavelength applications for image device 900 and optical system 901 based on the discussion herein. These other wavelength applications are within the scope and spirit of the present invention.

As illustrated in Figure 9, dichroic cut filter 902 may be positioned adjacent to a surface of a lens 903 in optical system 901 such that dichroic cut filter 902 receives each chief ray of light at a substantially uniform angle of incidence along its surface. For example, dichroic cut filter 902 may receive each chief ray of light at an angle normal to the surface of dichroic cut filter 902. In one embodiment, dichroic cut filter 902 may include layers of thin films with varying refractive indexes disposed on the surface of a lens, such as lens 903. One of skill in the art will recognize that dichroic cut filter 902 may be disposed on any lens in optical system 901 have a surface that receives each chief ray of light at a substantially uniform angle of incidence along its surface. The passband characteristics of dichroic cut filter 902 may be dependent on the number of layers and the refractive index of each layer of film. The fabrication of dichroic cut filters along a surface of a lens or transparent plate is known to those skilled in the art.

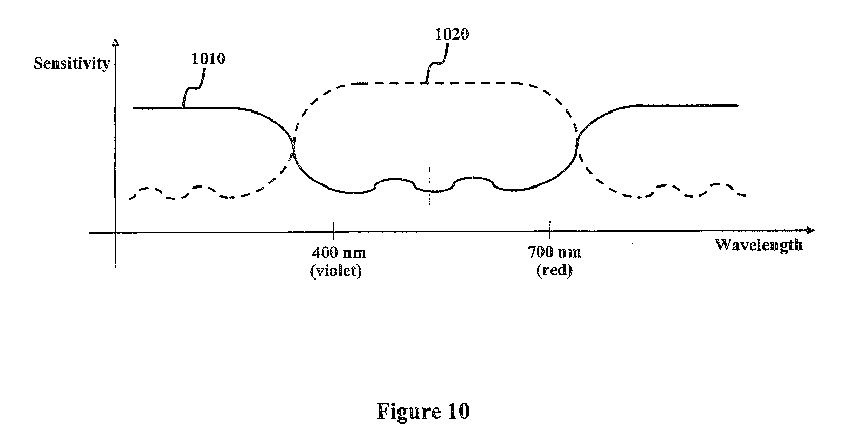

In one embodiment, dichroic cut filter 902 may include a broadband anti-reflective (BBAR) coating. Figure 10 illustrates an example of a signal characteristic of a BBAR coating 1010 superimposed on a dichroic cut filter's transmission curve 1020. The BBAR coating may be used to reduce a reflection of light at wavelengths within a passband of transmission curve 1020. In particular, the signal characteristic of the BBAR coating 1010 transmits light within the passband of transmission curve 1020. Although the BBAR coating signal characteristic 1010 may have a "ringing" effect within the passband of transmission curve 1020, this ringing may be designed such that a negligible amount of light is reflected within the passband.

At the same time, the BBAR coating may be used to attenuate transmission of light at wavelengths outside of the passband of transmission curve 1020 by reflecting such wavelengths away from image sensor 301. For example, as illustrated in Figure 10, transmission curve 1020 of the dichroic cut filter may have a ringing effect at wavelengths beyond its passband. This ringing effect may pass undesirable wavelengths of light onto image sensor 301. The BBAR coating may restrict these wavelengths of light from reaching the image sensor since, at these wavelengths, the signal characteristic of the BBAR coating 1010 reflects light away from image sensor 301.

Returning to Figure 9, lens 903 may receive chief rays of light 910 from an imaged object at a substantially uniform angle of incidence along its surface. In positioning dichroic cut filter 902 adjacent to the surface of lens 903, dichroic cut filter 902 also receives chief rays of light 910 at a substantially uniform angle along its surface. As a result, the characteristics of dichroic cut filter 902 have similar passband properties for all chief rays of light since the transmission curve for dichroic cut filter 902 depends on the angle of incidence of light striking the filter's surface.

For example, as chief rays of light 910 enter aperture 305 to be received by image sensor 301, light 910 enters lens 904. The curvature characteristics of lens 904 may adjust an angle of light 910 to strike dichroic cut filter 902 at a substantially uniform angle of incidence along the filter's surface. As a result, a transmission curve of dichroic cut filter 902 does not shift at varying points along the filter's surface due to different angles of incidence from light 910, as in previous systems.

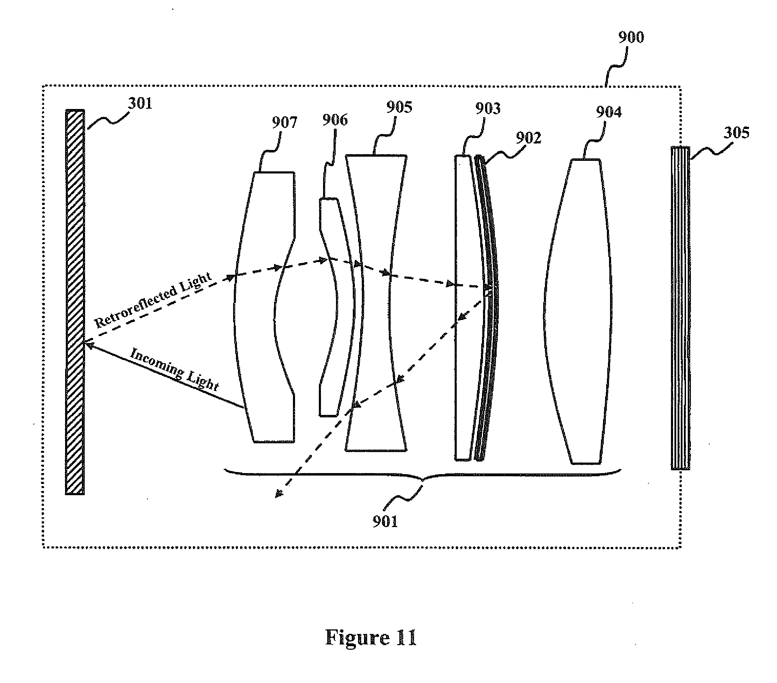

Further, dichroic cut filter 902 may be positioned near aperture 305 of image device 900, rather than close to image sensor 301. In positioning dichroic cut filter 902 at this location, dichroic cut filter 902 may minimize retroreflection of light in image device 900 in two ways. First, since dichroic cut filter 902 is a significant distance away from image sensor 301 (as compared to its distance from image sensor 301 in the conventional system of Figure 3), retroreflection of light back onto image sensor 301 is minimized since the retroreflected light would need to travel through optical system 901 in order to reflect off dichroic cut filter 902. Second, as illustrated in Figure 11, if the retroreflected light travels through optical system 901 and reflects off dichroic cut filter 902, the reflected light from dichroic cut filter 902 is likely to reflect away from image sensor 301 when striking a lens in optical system 901.

A person skilled in the art will appreciate that, in referring to Figure 9, dichroic cut filter 902 may be placed on any lens in optical system 901, as long as the lens receives chief rays of light at a substantially uniform angle of incidence along its surface.

Image sensor 301 captures chief rays of light 910 from an imaged object to be further processed by image device 900. Image sensor 301 may capture light 910 through photosensitive diodes, called photosites, each of which represents a single pixel in the image generated by image device 900. The more light received by a photosite, the more photons it records. On the other hand, photosites capturing information from darker objects (e.g., shadows or a dark alley) will record fewer photons. The photons from each photosite may be counted and converted into a digital number, which represents the color of a single pixel. Using the pixel information captured by the photosites on image sensor 301, image device 900 may construct an image with color and brightness set by each pixel. An example of image sensor 301 is a charge coupled device (CCD) image sensor or a complementary metal oxide semiconductor (CMOS) image sensor. Alternatively, other image sensors may be used.

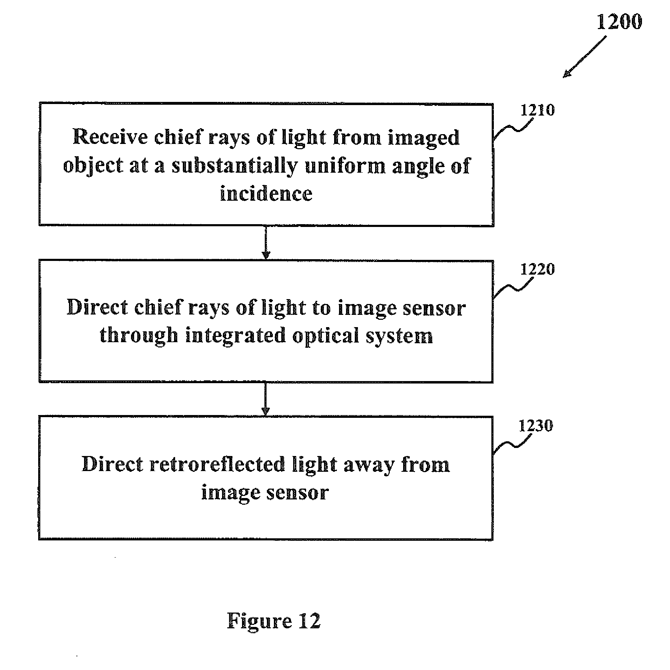

Figure 12 illustrates one embodiment of a method 1200 for wide-angle imaging in an image device. Method 1200 may occur using, for example, image device 900. In step 1210, chief rays of light of an imaged object are received by the image device at a substantially uniform angle of incidence. The chief rays of light may be received by an integrated optical system through an aperture of the image device, wherein the integrated optical system includes a wide-angle dichroic cut filter. The integrated optical system may include one or more lenses to project the light onto a detector plane of the image sensor. Further, the wide-angle dichroic cut filter may be positioned adjacent to a lens in the optical system, such that the filter receives chief rays of light at a substantially uniform angle of incidence along its surface. The dichroic cut filter may be positioned along a surface of a lens such that the dichroic cut filter maintains a substantially consistent transmission curve for all chief rays of light received by the image device.

In step 1220, the chief rays of light of the imaged object are directed to an image sensor. The image sensor may be used to process the light, where photosensitive diodes may be used to capture chief rays of light from the imaged object. Each photosensitive diode may represent a single pixel in the image generated by the image device.

In step 1230, retroreflected light is directed away from the image sensor. The dichroic cut filter may be positioned near an aperture of the image device to minimize a retroreflection of light on the image sensor. In positioning the dichroic cut filter at this location, a retroreflection of light is unlikely to hit the image sensor due to the proximity of the dichroic cut filter from the image sensor. Additionally, in the event that a retroreflected light reflects off the dichroic cut filter, the retroreflected light is likely to reflect away from the image sensor when striking a lens in the optical system of the image device.

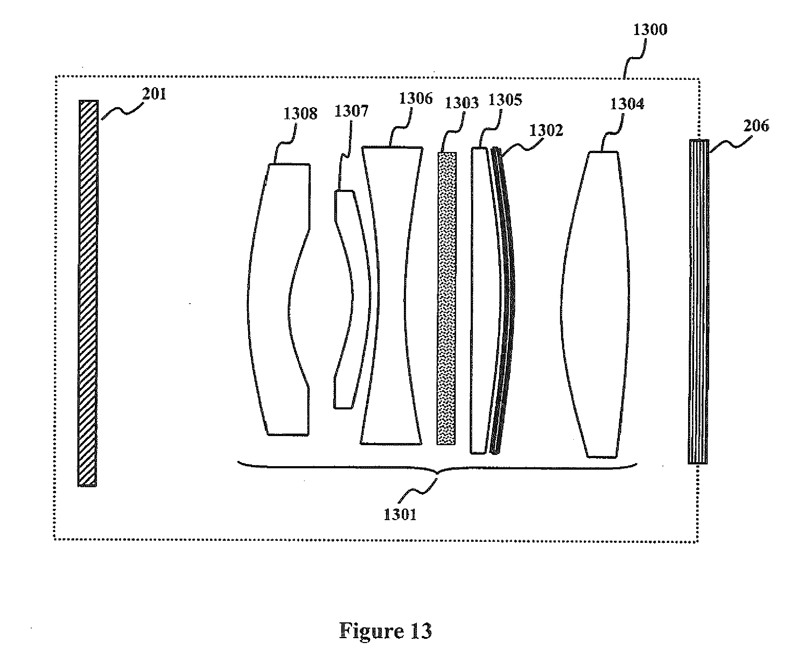

Figure 13 illustrates one embodiment of an image device 1300 with an optical system 1301 configured to minimize flare. Optical system 1301 is integrated into image device 1300, where optical system 1301 transmits light received by aperture 206 to image sensor 201. Optical system 1301 may include one or more lenses 1304-1308 to receive light and to project the light onto a detector plane of image sensor 201. In addition to lenses 1304-1308, optical system 1301 includes a dichroic infrared (IR) cut filter 1302 and an absorptive ultraviolet (UV) cut filter 1303.

Dichroic IR cut filter 1302 and absorptive UV cut filter 1303 may be used to selectively pass a specified range of wavelengths while reflecting other wavelengths. For example, dichroic IR cut filter 1302 may block IR wavelengths of light, while transmitting shorter wavelengths of light. Absorptive UV cut filter 1303, conversely, may block UV wavelengths of light, while transmitting longer wavelengths of light. Together, dichroic IR cut filter 1302 and absorptive UV cut filter 1303 block light in the IR and UV spectrums, respectively, while transmitting visible light. The specific wavelengths of light mentioned in the description of image device 1300 and optical system 1301, and throughout this application, are given for example purposes only and are not meant to be limiting. Those skilled in the relevant art will recognize that other wavelength applications for image device 1300 and optical system 1301 may be used based on the discussion herein. These other wavelength applications are within the scope and spirit of the present invention.

Absorptive UV cut filter 1303 absorbs a significant portion of UV-wavelength light in optical system 1301, while transmitting light residing in the visible and IR spectrum. A dichroic cut filter, such as dichroic IR cut filter 1302, however, does not have as sharp of a cut band as an absorptive cut filter. Therefore, some IR light may still be transmitted through dichroic IR cut filter 1302. Such transmission depends on an angle of incidence at which light strikes dichroic IR cut filter 1302. This characteristic of dichroic IR cut filter 1302 may be used to reduce flare from non-image light in an IR cut band region of the cut filter's transmission curve.

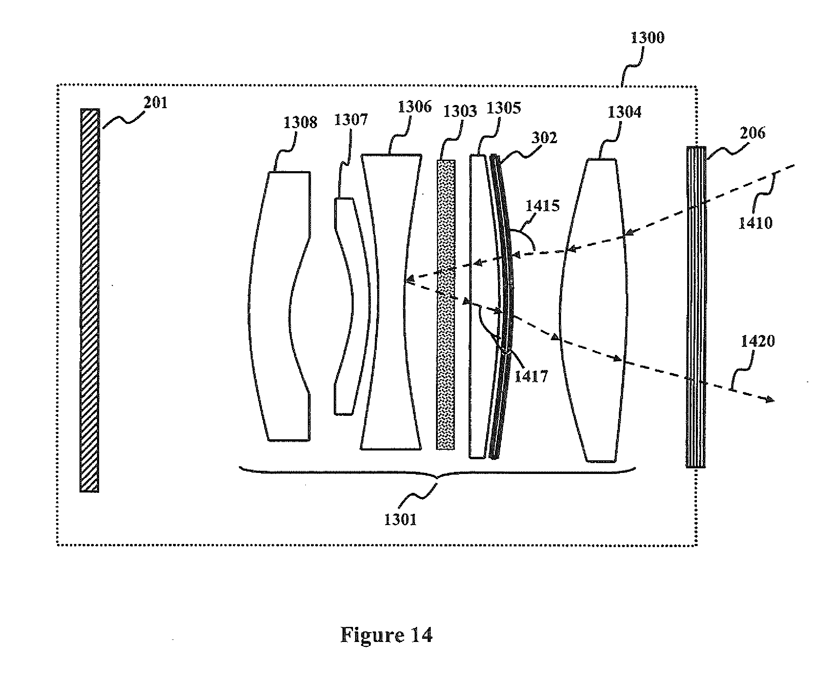

In image device 1300, flare may be reduced by disposing dichroic IR cut filter 1302 along a surface of a lens 1305 in optical system 1301, where dichroic IR cut filter 1302 receives light reflected from other surfaces in optical system 1301 at an angle of incidence larger than an angle of incidence of image light (e.g., angle of incidence of the chief image ray) entering dichroic IR cut filter 1302. Figure 14 illustrates image light 1410 entering aperture 206, traveling through lens 1304, striking dichroic IR cut filter 1302 at a first angle of incidence 1415, and reflecting off a surface of lens 1306 as reflected light 1420. Reflected light 1420 strikes dichroic IR cut filter 1302 at a second angle of incidence 1417 that is larger than first angle of incidence 1415. The transmission curve of dichroic IR cut filter 1302 shifts towards longer wavelengths as the angle of incidence of reflected light 1420 increases.

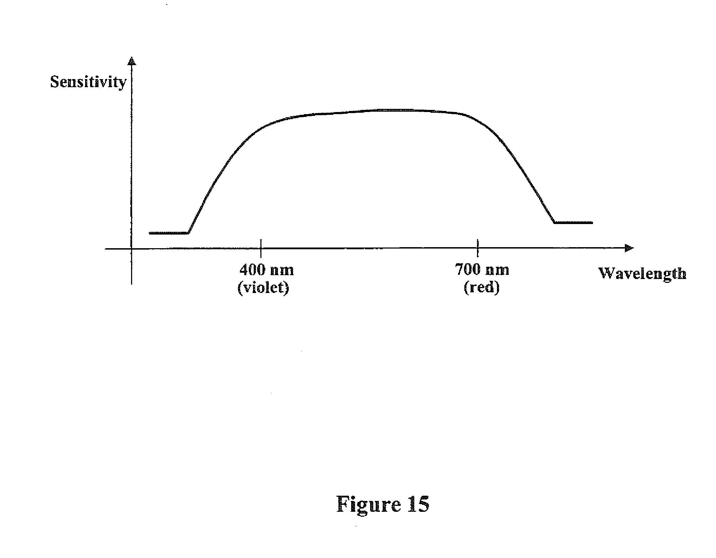

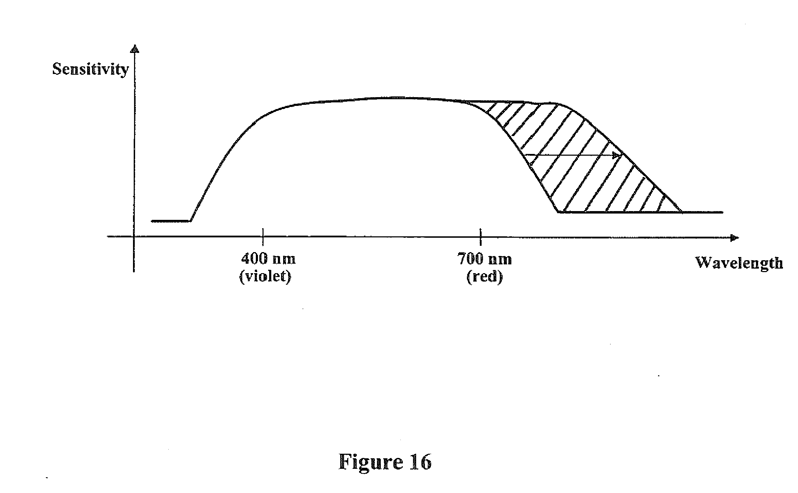

For instance, in reference to Figure 15, dichroic IR cut filter 1302 may have a specific transmission curve, where an IR cut band begins to roll off at 700nm for a specific angle of incidence of light striking the filter. As illustrated in Figure 16, if the angle of incidence of light striking the cut filter increases, then the roll off of the IR cut band may shift to longer wavelengths. In Figure 16, dichroic IR cut filter 1302 may transmit light at wavelengths longer than the visible spectrum (e.g., > 700nm). As a result, dichroic IR cut filter 1302 reduces the effect of flare by transmitting reflected light 1420, since the passband of the filter's transmission curve is widened and thus able to transmit reflected light 1420, including components of reflected light 1420 residing in the IR spectrum.

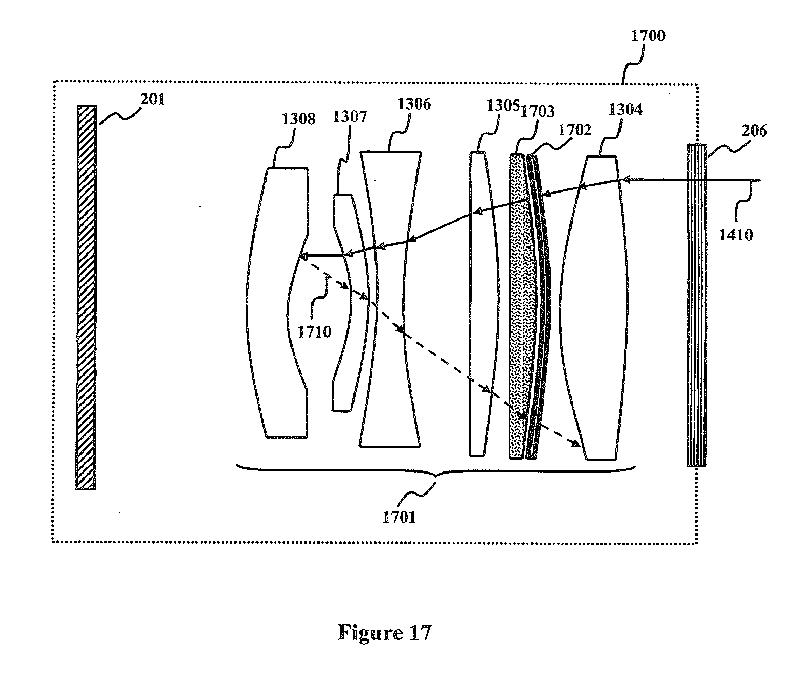

A person skilled in the relevant art will appreciate that dichroic IR cut filter 1302 may be disposed along one of many optical surfaces in optical system 1301 as long as the optical surface receives reflected light 1420 at an angle of incidence larger than an angle incidence of image light 1410 striking dichroic IR cut filter 1302. For example, as illustrated in Figure 17, a dichroic IR cut filter 1702 may be disposed along a surface of an absorptive UV cut filter 1703. In this configuration, reflected light 1710 (residing in the IR spectrum) may transmit through dichroic IR cut filter 1702 since the angle of incidence of reflected light 1710 striking dichroic IR cut filter 1702 is larger than the angle of incidence of image light 1410 entering dichroic IR cut filter 1702.

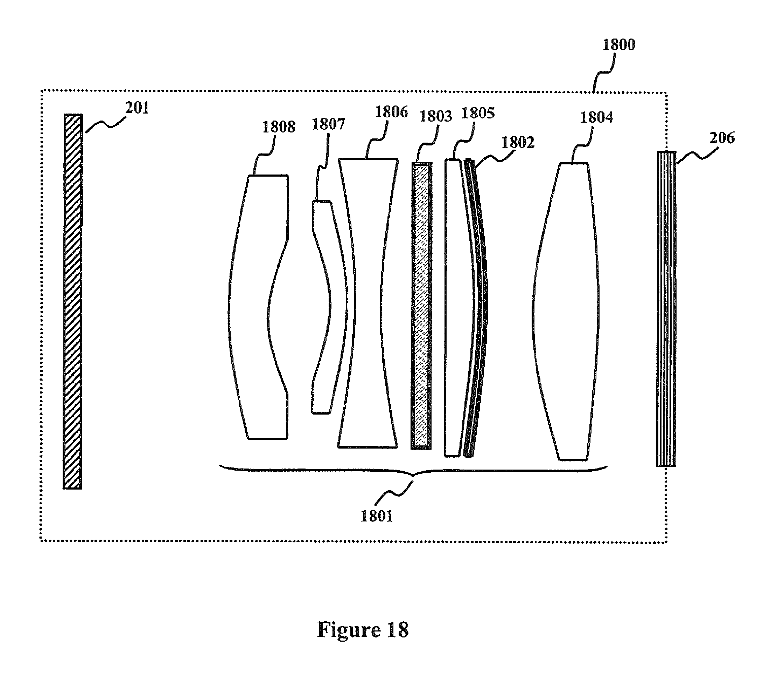

Figure 18 illustrates another embodiment of an image device 1800 with an optical system 1801 configured to minimize flare. Similarly to optical system 1301 in Figure 13, optical system 1801 is integrated into image device 1800, in which optical system 1801 transmits light received by aperture 206 to image sensor 201. Additionally, optical system 1801 may include one or more lenses 1804-1808 to receive light and to project the light onto a detector plane of image sensor 201. Among lenses 1804-1808, optical system 1801 includes a dichroic UV cut filter 1802 and an absorptive IR cut filter 1803. Together, dichroic UV cut filter 1802 and absorptive IR cut filter 1803 block light in the UV and IR spectrums, respectively, while transmitting visible light.

Absorptive IR cut filter 1803 effectively absorbs IR-wavelength light in optical system 1801, while transmitting light residing in the visible and UV spectrum. Because dichroic filters do not have as sharp of a cut band as absorptive filters, dichroic UV cut filter 1802 may either reflect or transmit the light depending on an angle of incidence at which light strikes dichroic UV cut filter 1802. This characteristic of dichroic UV cut filter 1802 may be used to reduce flare from light in the UV cut band region of the cut filter's transmission curve.

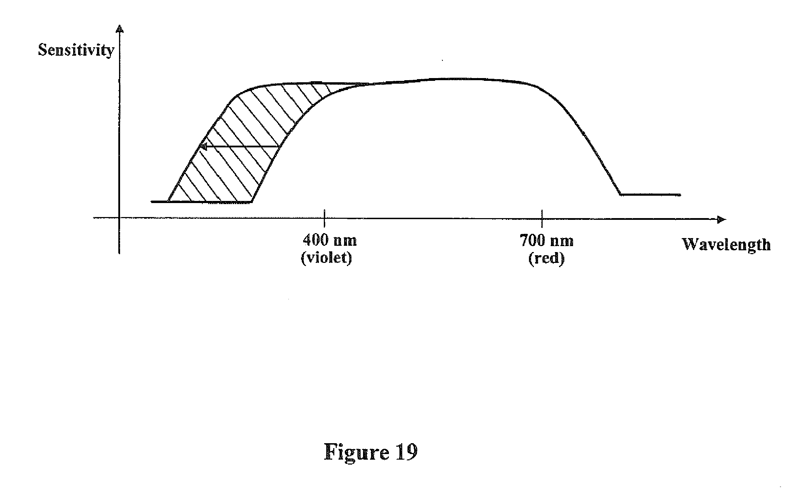

Similar to the transmission curve of dichroic IR cut filter 1302 in Figure 13, the transmission curve of dichroic UV filter 1802 shifts according to an angle of incidence of light striking the cut filter. For instance, referring to Figure 15, dichroic UV cut filter 1802 may have a specific transmission curve, where a UV cut band region begins to roll off at 400nm for a specific angle of light striking the filter. As illustrated in Figure 19, if the angle of incidence of light striking the cut filter decreases, then the roll off of the UV cut band may shift to shorter wavelengths. In Figure 19, dichroic UV cut filter 1802 transmits light at wavelengths shorter than the visible spectrum (e.g., < 400nm). As a result, dichroic UV cut filter 1802 can reduce the effect of flare caused by reflected light by transmitting the reflected UV-wavelength light back through dichroic UV cut filter, since the passband of the filter's transmission curve is widened and thus able to transmit the reflected light, including components of the reflected light residing in the UV spectrum.

Similar to dichroic IR cut filter 1702 in Figure 17, a person skilled in the relevant art will appreciate that dichroic UV cut filter 1802 may be disposed along one of many optical surfaces in optical system 1801 as long as the optical surface receives reflected light at an angle of incidence smaller than an angle of incidence of image light striking dichroic UV cut filter 1802.

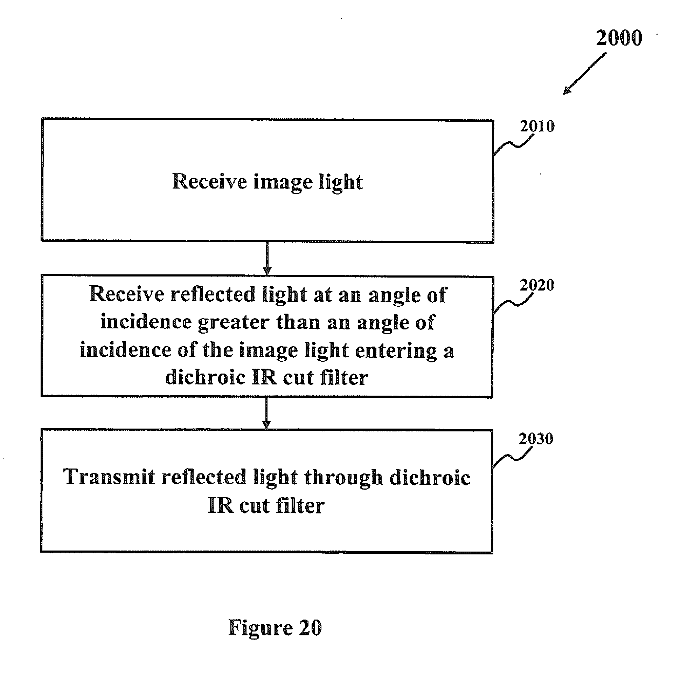

Figure 20 illustrates one embodiment of a method 2000 for reducing flare in an image device. Method 2000 may occur using, for example, image device 1300. In step 2010, image light is received by the image device. Image light refers to light that is associated with an imaged object (e.g., chief rays of light). The image light may be received by an aperture of the image device.

In step 2020, light reflected off one or more surfaces in the image device (e.g., non-image light) is received by a dichroic IR cut filter at an angle of incidence greater than an angle of incidence of image light entering the dichroic IR cut filter, such that the reflected light is transmitted back through the dichroic IR cut filter in step 2030. In this way, the reflected light is directed away from an image sensor of the image device and ghost images on the image sensor are reduced. The reflected light may reflect off one or more surfaces in an integrated optical system of the image device.

In another embodiment, light reflected off one or more surfaces in the image device (e.g., non-image light) is received by a dichroic UV cut filter at an angle of incidence greater than an angle of incidence of image light entering the dichroic UV cut filter, such that the reflected light is transmitted back through the dichroic UV cut filter in step 2030.

While various embodiments of the present invention have been described above, it should be understood that they have been presented by way of example, and not limitation. It will be apparent to persons skilled in the relevant art(s) that various changes can be made therein without departing from the scope of the invention. Furthermore, it should be appreciated that the detailed description of the present invention provided herein, and not the summary and abstract sections, is intended to be used to interpret the claims. The summary and abstract sections may set forth one or more but not all exemplary embodiments of the present invention as contemplated by the inventors.

The foregoing description of the specific embodiments will so fully reveal the general nature of the invention that others can, by applying knowledge within the skill of the art, readily modify and/or adapt for various applications such specific embodiments, without undue experimentation, without departing from the general concept of the present invention. Therefore, such adaptations and modifications are intended to be within the meaning and range of equivalents of the disclosed embodiments, based on the teaching and guidance presented herein. It is to be understood that the phraseology or terminology herein is for the purpose of description and not of limitation, such that the terminology or phraseology of the present specification is to be interpreted by the skilled artisan in light of the teachings and guidance. Accordingly, the breadth and scope of the present invention should not be limited by any of the above-described exemplary embodiments, but should be defined only in accordance with the following claims and their equivalents.

## Claims

1. An apparatus for wide-angle imaging in an image device, comprising:
an optical system integrated into the image device; and
a wide-angle dichroic cut filter positioned adjacent to a surface of a lens in the optical system, wherein the lens receives chief rays of light at a substantially uniform angle of incidence along its surface.

2. The apparatus of claim 1, wherein the optical system comprises one or more lenses to receive chief rays of light from the imaged object and to project the chief rays of light onto a detector plane of an image sensor.

3. The apparatus of claim 1, wherein the dichroic cut filter comprises an ultra-violet/infrared (UV/IR) cut filter to block UV and IR wavelengths of light and to transmit visible light.

4. The apparatus of claim 3, wherein the UV/IR cut filter comprises a broadband ant-reflective coating to reduce a reflection of light at wavelengths within a passband of a transmission curve of the UV/IR cut filter and to attenuate light at wavelengths outside of the passband.

5. The apparatus of claim 1, wherein the dichroic cut filter is positioned near an aperture of the image device to minimize a retroreflection of light on an image sensor and to direct the retroreflection of light away from the image sensor.

6. The apparatus of claim 1, wherein the image device comprises at least one of a charge coupled device image sensor or a complementary metal oxide semiconductor image sensor.

7. A method for wide-angle imaging in an image device, comprising:
receiving chief rays of light from an imaged object; and
directing the chief rays of light to an image sensor through an integrated optical system with a wide-angle dichroic cut filter positioned adjacent to a lens in the optical system, wherein the lens receives chief rays of light at a substantially uniform angle of incidence along its surface.

8. The method of claim 7, further comprising directing retroreflected light away from the image sensor.

9. The method of claim 7, wherein receiving chief rays of light from the imaged object comprises receiving chief rays of light through an aperture of the image device.

10. The method of claim 7, wherein receiving chief rays of light from the imaged object comprises configuring photosensitive diodes, each of which represent a single pixel in the image generated by the image device, to capture chief rays of light from the imaged object.

11. The method of claim 7, wherein directing the chief rays of light to the image sensor comprises using the optical system, with a plurality of lenses, to project the chief rays of light onto a detector plane of the image sensor.

12. The method of claim 7, wherein directing the chief rays of light to the image sensor comprises positioning a UV/IR cut filter adjacent to a surface of the lens to maintain a substantially consistent transmission curve for all chief rays of light received by the image device.

13. The method of claim 8, wherein directing retroreflected light away from the image sensor comprises positioning a dichroic cut filter near an aperture of the image device to minimize a retroreflection of light on the image sensor.

14. An apparatus for reducing flare in an image device, comprising:
an absorptive ultraviolet (UV) cut filter positioned in an integrated optical system; and
a dichroic infrared (IR) cut filter disposed on a lens in the optical system, wherein the dichroic IR cut filter receives reflected light from one or more surfaces in the optical system at an angle of incidence larger than an angle of incidence of image light entering the dichroic IR cut filter.

15. The apparatus of claim 14, wherein the optical system comprises one or more lenses to receive chief rays of light from an imaged object and to project the chief rays of light onto a detector plane of an image sensor.

16. The apparatus of claim 15, wherein the dichroic IR cut filter is disposed on a lens in the optical system to reduce a reflection of IR-wavelength light as an angle of incidence of reflected light striking the dichroic IR cut filter increases.

17. The apparatus of claim 16, wherein the dichroic IR cut filter is disposed on a lens containing the absorptive UV cut filter.

18. The apparatus of claim 14, wherein the one or more surfaces comprises at least one of walls in an assembly of the optical system, dust particles in the optical system, imperfections on optical surfaces in the optical system, or an air/glass surface interface in the optical system.

19. An apparatus for reducing flare in an image device, comprising:
an absorptive infrared (IR) cut filter positioned in an integrated optical system; and
a dichroic ultraviolet (UV) cut filter disposed on a lens in the optical system, wherein the dichroic UV cut filter receives reflected light from one or more surfaces in the optical system at an angle of incidence smaller than an angle of incidence of image light entering the dichroic UV cut filter.

20. The apparatus of claim 19, wherein the optical system comprises one or more lenses to receive chief rays of light from an imaged object and to project the chief rays of light onto a detector plane of an image sensor.

21. The apparatus of claim 20, wherein the dichroic UV cut filter is disposed on a lens in the optical system to reduce a reflection of UV-wavelength light as an angle of incidence of reflected light striking the dichroic UV cut filter decreases.

22. The apparatus of claim 21, wherein the dichroic UV cut filter is disposed on a lens containing the absorptive IR cut filter.

23. The apparatus of claim 19, wherein the one or more surfaces comprises at least one of walls in an assembly of the optical system, dust particles in the optical system, imperfections on optical surfaces in the optical system, or an air/glass surface interface in the optical system.
